(19) Europäisches Patentamt
European Patent Office
Office européen des brevets

(11) **EP 2 443 011 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **10714283.8**

(22) Anmeldetag: **20.04.2010**

(51) Int Cl.:
*B60W 20/00* (2006.01)     *B60W 10/02* (2006.01)
*B60W 10/06* (2006.01)     *B60W 10/08* (2006.01)
*B60W 30/18* (2012.01)     *B60K 6/52* (2007.10)
*B60K 6/48* (2007.10)      *B60K 6/442* (2007.10)

(86) Internationale Anmeldenummer:
**PCT/EP2010/055152**

(87) Internationale Veröffentlichungsnummer:
**WO 2010/145863 (23.12.2010 Gazette 2010/51)**

(54) **VERFAHREN UND VORRICHTUNG ZUR BESTIMMUNG DES BEGINNS EINER STARTPHASE EINES VERBRENNUNGSMOTORS IN EINEM HYBRIDFAHRZEUG**

METHOD AND DEVICE FOR DETERMINING THE BEGINNING OF A START PHASE OF AN INTERNAL COMBUSTION ENGINE IN A HYBRID VEHICLE

PROCÉDÉ ET DISPOSITIF DE DÉTERMINATION DU DÉBUT D'UNE PHASE DE DÉMARRAGE D'UN MOTEUR À COMBUSTION INTERNE DANS UN VÉHICULE HYBRIDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.06.2009 DE 102009027001**

(43) Veröffentlichungstag der Anmeldung:
**25.04.2012 Patentblatt 2012/17**

(73) Patentinhaber: **Robert Bosch GmbH
70442 Stuttgart (DE)**

(72) Erfinder:
• **STEUERNAGEL, Frank
70469 Stuttgart (DE)**
• **MAASS, Alexander
71636 Ludwigsburg (DE)**
• **SEEL, Andreas
53229 Bonn (DE)**

(56) Entgegenhaltungen:
EP-A1- 1 366 949      DE-A1-102006 008 640
DE-A1-102006 048 355  DE-A1-102007 010 770
DE-A1-102007 019 988  DE-A1-102007 023 164
US-A1- 2003 088 343

**Beschreibung**

Stand der Technik

Die Erfindung betrifft ein Verfahren zur Bestimmung des Beginns einer Startphase eines Verbrennungsmotors in einem Hybridfahrzeug, in welchem ein zweites Antriebsaggregat das Hybridfahrzeug antreibt, wobei bei Erreichung eines bestimmten Antriebsmomentes des zweiten Antriebsaggregates der Verbrennungsmotor gestartet wird sowie eine Vorrichtung zur Durchführung des Verfahrens, vgl. DE 10 2006 008 640 A.

Fahrzeuge mit einer hybriden Antriebsstruktur weisen einen Verbrennungsmotor und als zweites Antriebsaggregat meistens einen Elektromotor auf. So kann das Antriebsmoment während des Fahrbetriebes des Hybridfahrzeuges von beiden Antriebsaggregaten aufgebracht werden.

Bei einem so genannten Parallelhybrid ist der Elektromotor auf der Welle des Verbrennungsmotors angeordnet, wobei der Elektromotor über eine Kupplung mit dem Verbrennungsmotor verbunden ist. Wird das Hybridfahrzeug allein von dem Elektromotor angetrieben, ist die Leistung des Hybridfahrzeuges durch ein maximales Antriebsmoment des Elektromotors begrenzt. Reicht dieses maximale Antriebsmoment nicht mehr aus, um dem Fahrerwunsch nach weiterer Beschleunigung des Hybridfahrzeuges nachzukommen, wird die Kupplung geschlossen, wobei der Elektromotor den Verbrennungsmotor anschleppt und diesen dabei startet. Ab diesem Zeitpunkt tragen sowohl der Elektromotor als auch der Verbrennungsmotor zum Antrieb des Hybridfahrzeuges bei.

Während der Verbrennungsmotor-Startphase muss der Elektromotor zusätzlich zum Fahrzeugantriebsmoment das Anschleppmoment für den Verbrennungsmotor aufbringen. Dabei kann es vorkommen, dass der Elektromotor nicht mehr ausreichend Moment für den gleichzeitigen Antrieb des Hybridfahrzeuges und das Anschleppmoment zur Verfügung stellen kann, da z.B. bei einer steigenden Drehzahl des Elektromotors das verfügbare stellbare Antriebmoment sinkt. In diesem Fall bricht die Fahrzeugbeschleunigung mit einem vom Fahrer spürbaren unkomfortablen Ruck ein.

Offenbarung der Erfindung

Das erfindungsgemäße Verfahren zur Bestimmung des Beginns einer Startphase bzw. einer Verbrennungsmotorstartauslösung eines Verbrennungsmotors in einem Hybridfahrzeug mit den Merkmalen des Anspruchs 1 weist dabei den Vorteil auf, dass immer der maximale rein elektrische Fahrbereich des Hybridfahrzeuges mit dem zweiten Antriebsaggregat erzielt wird, wobei durch eine optimierte Verbrennungsmotorstartauslösung der Fahrkomfort des Hybridfahrzeuges verbessert wird. Dadurch, dass der Verbrennungsmotor zu einem Zeitpunkt gestartet wird, wenn ein prädiziertes Antriebsmoment des zweiten Antriebsaggregates kleiner oder gleich dem aktuell gemessenen und um eine Momentenreserve erhöhtes Antriebsmoment des zweiten Antriebsaggregates ist, wird der optimale Zeitpunkt des Beginns der Startphase des Verbrennungsmotors eingestellt. Es wird sichergestellt, das während des Verbrennungsmotorstartverlaufes das zweite Antriebsaggregat nicht in eine Momentenbegrenzung gerät, sondern das gestellte Antriebsmoment idealerweise gerade ausreicht, um den Verbrennungsmotor noch ruckfrei zu starten. Auf feste Applikationen, die entweder ein zu frühes Starten des Verbrennungsmotors verursachen, wodurch der Fahrbereich des zweiten Antriebsaggregates zu frühzeitig eingeschränkt wird, oder ein zu spätes Starten des Verbrennungsmotors hervorrufen, durch welches ein Einbruch der Fahrzeugbeschleunigung und somit eine spürbare Komforteinbuse durch einen Ruck im Fahrzeug hervorgerufen wird, kann somit verzichtet werden.

Vorteilhafterweise wird das prädizierte Antriebsmoment des als Elektromotor ausgebildeten zweiten Antriebsaggregates in Abhängigkeit von einer Drehzahländerung des Elektromotors während der Startphase des Verbrennungsmotors ermittelt. Durch die stetige Vorausbestimmung des verfügbaren Antriebsmomentes des Elektromotors während des elektrischen Fahrens wird durch eine rechtzeitige Verbrennungsmotorstartauslösung ein ruckfreier Verbrennungsmotorstart sichergestellt.

In einer Ausbildung wird die Drehzahländerung des Elektromotors aus einer Drehzahl zu Beginn der Startphase des Verbrennungsmotors z. B. wenn der Verbrennungsmotor beginnt sich zu drehen und einer vorausbestimmten Drehzahl am Ende der Startphase des Verbrennungsmotors z.B. wenn der Verbrennungsmotor die ersten Einspritzungen und Zündungen vollzogen hat, ermittelt, wobei die Drehzahl zu Beginn der Startphase des Verbrennungsmotors zum Zeitpunkt der Messung des aktuellen Antriebsmomentes bestimmt wird. Ausgehend von dem aktuellen Antriebsmoment des Elektromotors zu Beginn der Startphase des Verbrennungsmotors wird auf der Grundlage der vorausbestimmten Drehzahl am Ende der Startphase das prädizierte Antriebsmoment des Elektromotors bestimmt, welches als Entscheidungskriterium zur Einleitung der Startphase des Verbrennungsmotors genutzt wird.

In einer Weiterbildung wird zur Vereinfachung der Berechnung die Drehzahländerung des zweiten Antriebsaggregates als konstanter Wert während der Startphase angenommen, welcher zu der zu Beginn der Startphase des Verbrennungsmotors ermittelten Drehzahl bei ansteigendem Drehzahlverlauf addiert und bei einem sinkenden Drehzahlverlauf des zweiten Antriebsaggregates subtrahiert wird. Bei einem ansteigenden Drehzahlverlauf erfolgt der Beginn der Startphase oder auch die Verbrennungsmotorstartauslösung in der Regel früher, bei einem sinkenden Drehzahlverlauf in der Regel später. Mit einem solchen festen Offset lässt sich das prädizierte Antriebsmoment des Elektromotors zuverlässig bestimmen.

Alternativ wird die vorausbestimmte Drehzahl zum Ende der Startphase des Verbrennungsmotors aus einer vergangenen oder einer aktuellen Drehzahlentwicklung des Elektromotors bestimmt. Die sich dadurch einstellende Drehzahldifferenz ist variabel, was eine bessere Annährung des prädizierten Antriebsmomentes des Elektromotors an die tatsächlich gegebenen Verhältnisse des Hybridfahrzeuges ermöglicht.

Vorteilhafterweise wird die Drehzahländerung oder die Drehzahl zum Startbeginn und zum Startende des Verbrennungsmotors aus einem vom Fahrer des Hybridfahrzeuges eingestellten Wunschantriebsmoment ermittelt. Auch diese Methode führt zu einer variablen Einstellung der Drehzahldifferenz, da in Abhängigkeit des Wunschantriebsmomentes unterschiedliche vorausbestimmte Drehzahlen am Ende der Startphase des Verbrennungsmotors ermittelt werden.

In einer Weiterbildung der Erfindung wird die Drehzahländerung oder die Drehzahl zu Beginn der Startphase des Verbrennungsmotors und die Drehzahl am Ende der Startphase des Verbrennungsmotors bei einem angezeigten, ermitteltem, prädizierten oder erwarteten Gangwechsel des Hybridfahrzeuges über ein bekanntes Übersetzungsverhältnis eines Getriebes korrigiert. Auch diese Anpassung der Drehzahländerung ermöglicht eine optimale Bestimmung des prädizierten Antriebsmomentes des Elektromotors an das tatsächliche Fahrverhalten des Hybridfahrzeuges.

Vorteilhafterweise wird das prädizierte Antriebsmoment des Elektromotors regelmäßig während des Betriebes des Elektromotors, insbesondere in vorgegebenen Zeitabständen wiederholt. Damit wird sichergestellt, dass die Startphase des Verbrennungsmotors immer zum optimalen Zeitpunkt in Abhängigkeit von den jeweils konkreten Anforderungen an den Fahrbetrieb eingeleitet werden kann, indem die aktuellen Anforderungen an den Fahrbetrieb stetig überwacht werden.

In einer Ausgestaltung erfolgt die Ermittlung des prädizierten Antriebsmomentes des Elektromotors bei einer konstanten Leistung ab der Eckdrehzahl des Elektromotors. Dieses Vorgehen stellt eine besonders komfortable Bestimmung des prädizierten Antriebsmomentes dar, da das Verhalten des Elektromotors bei vorgegebenen Drehzahlen bekannt ist. Bei Elektromotorenkennzahlen unterhalb einer sogenannten Eckdrehzahl ist das maximal verfügbare Antriebsmoment konstant, während es oberhalb dieser Eckdrehzahl n zu einem mit 1/n sinkenden maximalen Antriebsmoment kommt.

In einer Weiterbildung erfolgt die Ermittlung des prädizierten Antriebsmomentes des Elektromotors in Abhängigkeit der Leistung einer den Elektromotor mit Energie speisenden Hochvoltbatterie. Da die maximale Leistung des Elektromotors und somit das von ihm gelieferte Antriebsmoment durch die verfügbare Batterieleistung beschränkt wird, ist es von besonderer Bedeutung die Leistung der Hochvoltbatterie mit zu berücksichtigen, da diese einen Schwerpunkt bei der Analyse des tatsächlichen Fahrerhaltens des Elektromotors darstellt.

Vorteilhafterweise erfolgt die Ermittlung des prädizierten Antriebsmomentes des Elektromotors spätestens vor der Erreichung eines um die Momentenreserve verringerten Wertes eines maximalen Antriebsmomentes des Elektromotors. Die Feststellung des Berechnungszeitpunktes des prädizierten Antriebsmomentes stellt sicher, dass der Elektromotor immer ein genügend großes Antriebsmoment bereitstellt, mittels welchem nicht nur der Fahrbetrieb des Hybridfahrzeuges, sondern auch ein ruckfreies Anschleppen des Verbrennungsmotors sichergestellt werden kann.

In einer Weiterbildung wird der Beginn der Startphase des Verbrennungsmotors durch ein Steuersignal eingeleitet, falls das prädizierte Antriebsmoment des Elektromotors kleiner oder gleich dem aktuell gemessenen und um die Momentenreserve erhöhte Antriebsmoment des Elektromotors ist, wodurch ein Schließen einer Kupplung zwischen dem Verbrennungsmotor und dem Elektromotor eingeleitet wird. Ein Ende der Startphase des Verbrennungsmotors ist erreicht, wenn die Kupplung vollständig geschlossen ist. Somit lässt sich der Beginn und das Ende der Startphase des Verbrennungsmotors, welche sich immer über einige Sekundenbruchteile hinzieht, genau feststellen, wodurch die der Berechnung des prädizierten Antriebsmomentes zu Grunde liegenden Drehzahlen genau bestimmt werden können.

In einer Ausgestaltung stellt die Momentreserve ein Anschubdrehmoment des Verbrennungsmotors dar, welches konstant oder variabel ausgestaltet sein kann. Dadurch wird sicher gestellt, dass immer ausreichend Antriebsmoment zum Anschleppen des Verbrennungsmotors zur Verfügung steht.

Eine andere Weiterbildung der Erfindung betrifft eine Vorrichtung zur Bestimmung des Beginns einer Startphase eines Verbrennungsmotors in einem Hybridfahrzeug, in welchem ein zweites Antriebsaggregat das Hybridfahrzeug antreibt, wobei bei Erreichung eines bestimmten Antriebsmomentes des zweiten Antriebsaggregates der Verbrennungsmotor gestartet wird. Um immer den maximale Fahrbereich des zweiten Antriebsaggregates zu erzielen und dabei gleichzeitig durch eine Optimierung der Verbrennungsmotorstartauslösung den Fahrkomfort des Hybridfahrzeuges zu verbessern, sind Mittel vorhanden, welche den Verbrennungsmotor starten, wenn ein prädiziertes Antriebsmoment des zweiten Antriebsaggregates kleiner oder gleich dem aktuell gemessenen und um eine Momentenreserve erhöhtes Antriebsmoment des zweiten Antriebsaggregates ist. Auf feste Applikationswerte, die entweder ein zu frühes Starten des Verbrennungsmotors verursachen, wodurch der Fahrbereich des zweiten Antriebsaggregates zu frühzeitig eingeschränkt wird, oder ein zu spätes Starten des Verbrennungsmotors hervorrufen, durch welches ein Einbruch der Fahrzeugbeschleunigung und somit eine spürbare Komforteinbuse durch einen Ruck im Fahrzeug hervorgerufen wird, kann somit verzichtet werden.

Vorteilhafterweise ist das als Elektromotor ausgebildete zweite Antriebsaggregat mit einer das prädizierte Antriebsmoment des Elektromotors berechnenden und mit dem aktuell gemessenen Antriebsmoment des Elektromotors vergleichenden Steuereinheit verbunden, welche eine zwischen Elektromotor und Verbrennungsmotor angeordnete Kupplung zum Öffnen oder Schließen ansteuert. Die Steuereinheit ermöglicht durch die ständige Überwachung des prädizierten Antriebsmomentes des Elektromotors, dass das maximal zu jedem Zeitpunkt zur Verfügung stehende Antriebsmoment des Elektromotors ausreicht, um das Fahrzeug elektrisch anzutreiben und den Verbrennungsmotor ruckfrei zu starten.

In einer Ausgestaltung ist der Elektromotor auf einer Welle des Verbrennungsmotors angeordnet, was einen konstruktiv einfachen Aufbau des Antriebsstranges des Hybridfahrzeuges ermöglicht.

Die Erfindung lässt zahlreiche Ausführungsmöglichkeiten zu. Eine davon soll anhand der in der Zeichnung dargestellten Figuren näher erläutert werden.

Es zeigt:

Figur 1:  schematische Darstellung für ein als Parallelhybrid ausgeführtes Hybridfahrzeug

Figur 2:  Momenten/Drehzahl-Verhalten des Elektromotors bei konstanter Leistung

Figur 3:  schematisches Ablaufdiagramm für ein Ausführungsbeispiel des erfindungsgemäßen Verfahrens

Figur 4:  Beispiel für eine Startauslösung des Verbrennungsmotors anhand des Momenten/Drehzahl-Diagramms des Elektromotors.

Figur 5:  schematische Darstellung für ein als Achshybrid ausgeführtes Hybridfahrzeug

Gleiche Merkmale sind mit gleichen Bezugszeichen gekennzeichnet.

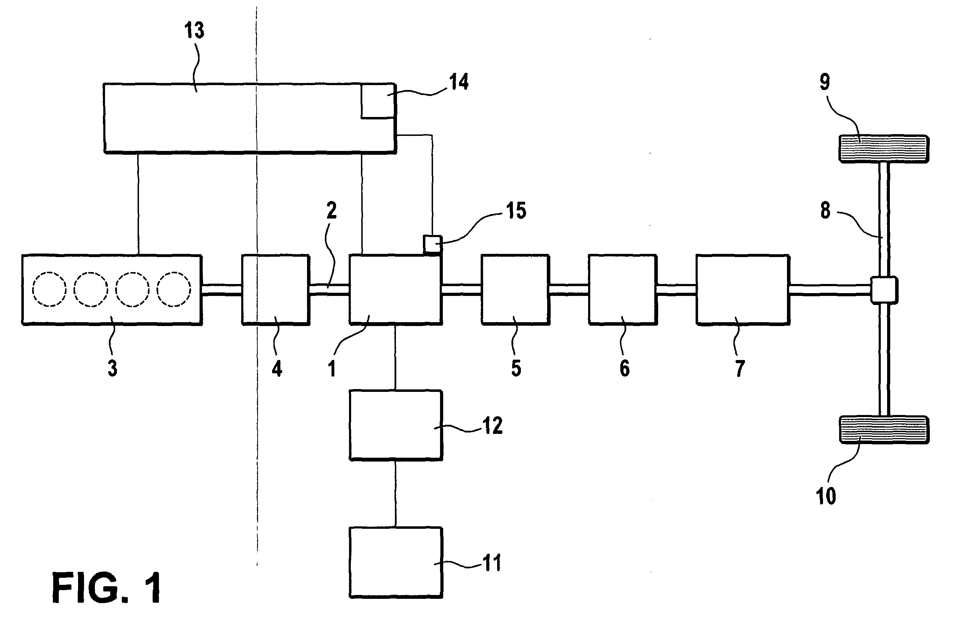

Figur 1 zeigt ein als Parallelhybrid ausgebildetes Hybridfahrzeug. In dieser Ausbildung ist ein Elektromotor 1 auf der Antriebswelle 2 eines Verbrennungsmotors 3 angeordnet. Der Verbrennungsmotor 3 ist über eine Trennkupplung 4 mit dem Elektromotor 1 verbunden. Der Elektromotor 1 führt über eine Anfahrkupplung 5 auf einen Drehmomentwandler 6, welcher mit einem Getriebe 7 verbunden ist. Das Getriebe 7 ist an eine Achse 8 geführt, an welcher die Räder 9, 10 angeordnet sind, die von dem beschriebenen Antriebsstrang angetrieben werden.

Der Elektromotor 1 wird von einer Hochvoltbatterie 11 mit Energie versorgt, welche über einen Inverter 12 mit dem Elektromotor 1 verbunden ist. Gesteuert werden der Elektromotor 1 und der Verbrennungsmotor 3 von einem Steuergerät 13. Das Steuergerät 13 umfasst einen Speicher 14, in welchem Kennlinien für verschiedene Betriebsparameter abgelegt sind.

Es gibt verschiedene Betriebsbereiche, in welchen ein Parallelhybrid betrieben werden kann. Ein erster Betriebsbereich, bei welchem die Trennkupplung 4 geöffnet ist und der Verbrennungsmotor 3 von Antriebsstrang getrennt und automatisch gestoppt ist, wird als eDrive bezeichnet, da das Hybridfahrzeug rein elektrisch durch den motorisch geschalteten Elektromotor 1 und die in der Hochvoltbatterie 11 gespeicherte Energie angetrieben wird. Besteht ein Momentenbedarf, welcher von dem Elektromotor 1 allein nicht mehr aufgebracht werden kann, wird der Verbrennungsmotor 3 automatisch gestartet und an den Antriebsstrang angekuppelt, was durch Schließung der Trennkupplung 4 erfolgt. Der Verbrennungsmotor 3 trägt nun zum Antrieb des Hybridfahrzeuges bei. Zum Schließen der Trennkupplung 4 gibt das Steuergerät 13 einen Schließbefehl an die Trennkupplung 4 aus. Zu diesem Zeitpunkt beginnt die Startphase des Verbrennungsmotors 3. Die Startphase endet, wenn sich die Trennkupplung 4 vollständig geschlossen hat und der Verbrennungsmotor 3 die ersten Einspritzungen und Zündungen vollzogen hat/oder selbständig lauffähig ist. Auf Grund der Trägheit sowohl des Verbrennungsmotors 3 als auch der Trennkupplung dauert diese Startphase mehrere Sekundenbruchteile.

Der Verbrennungsmotor 3 wird dabei von dem Elektromotor 1 angeschleppt, wobei sich die Startphase des Verbrennungsmotors 3 über den erläuterten Zeitraum erstreckt, da der Verbrennungsmotor 3 von der Drehzahl Null auf eine Mindestdrehzahl beschleunigt bzw. gebracht werden muss, bevor er einen Beitrag zum Fahrbetrieb des Hybridfahrzeuges leisten kann.

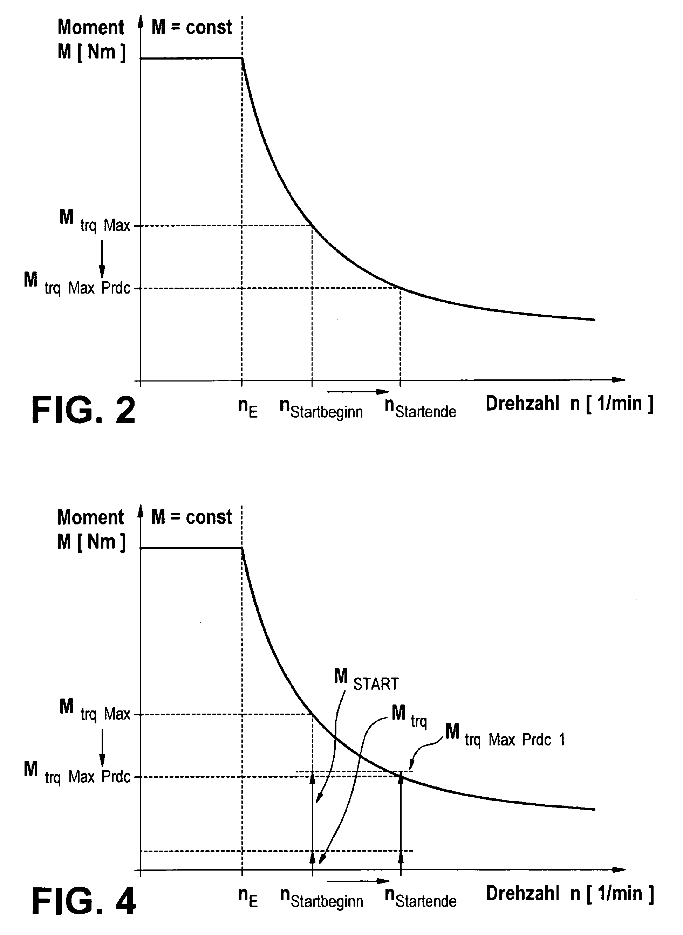

Beim Elektromotor 1 ändert sich das maximale Antriebsmoment des Elektromotors in Abhängigkeit von der Drehzahl, wie es aus Figur 2 ersichtlich ist. Oberhalb einer Eckfrequenz $f_E$ bzw. unterhalb der sich daraus ergebenden Drehzahl $n_E = 1/f_E$ ist das maximal verfügbare Antriebsmoment M des Elektromotors 1 konstant. Bei Drehzahlen des Elektromotors oberhalb der so genannten Eckdrehzahl $n_E$ wird der Elektromotor 1 maximal auf einer Kurve konstanter Leistung betrieben. Dies führt mit steigender Drehzahl n zu einem mit 1/n sinkenden Antriebsmoment M. Soll nun der Verbrennungsmotor 3 gestartet werden, was z.B. durch ein Fahrerwunschmoment ausgelöst wird, weist der Elektromotor 1 zu dem Zeitpunkt, an welchen das Steuergerät 13 an die Trennkupplung 4 einen Schließbefehl ausgibt, bei der Drehzahl$_{Startbeginn}$ ein aktuelles Antriebsmoment M$_{trqMax}$ auf. In der Verbrennungsmotor- Startsituation der Figur 2 steigt die Drehzahl n des Elektromotors 1 beispielhaft an. Der Elektromotor 1 muß neben dem Antriebsmoment auch das Anschleppmoment des Verbrennungsmotors aufbringen muss, welches durch Reib- und Beschleunigungsanteile bestimmt wird. Zum Zeitpunkt des Endes der Verbrennungsmotorstartsituation, wenn also die Trennkupplung 4 vollständig geschlossen ist und der Verbrennungsmotor 3 vollständig einen konkreten Beitrag zum Antriebsmoment des Hybridfahrzeuges leistet, weist der Elektromotor 1 bei einer Drehzahl n$_{Startende}$ lediglich ein Antriebsmoment M$_{trqMaxPrdc}$ auf.

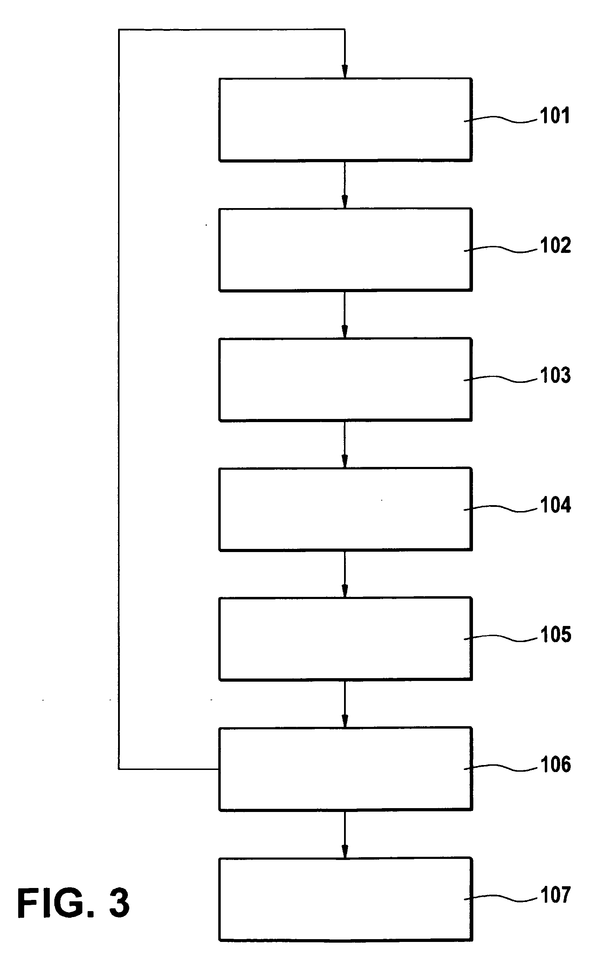

Mit Hilfe von Figur 3 wird eine mögliche Ausführungsform des erfindungsgemäßen Verfahrens erläutert. Im Block 101 wird auf Befehl des Steuergerätes 13 z.B. durch den Momentensensor 15 oder durch einen intelligenten Inverter (Ansteuereinheit des Elektromotors) das aktuelle Antriebsmoment M$_{trq}$ des Elektromotors 3 zur Verfügung gestellt. Außerdem wird im Speicher 14 ein fester Wert von 50 Nm als Momentenreserve M$_{Start}$ zum Anschleppen des Verbrennungsmotors 3 abgespeichert.

Die zum aktuellen Antriebsmoment M$_{trq}$ gehörige Drehzahl n$_{Startbeginn}$ wird im Block 102 durch die Methode der Triebstrangmodellierung bestimmt. Es ist aber auch möglich, diese mittels eines nicht weiter dargestellten Drehzahlsensors zu bestimmen, welcher die Drehzahl am Abtrieb des Elektromotors 3 misst.

Im Block 103 ermittelt das Steuergerät 13 im Voraus die Drehzahl n$_{Startende}$. Dies erfolgt z.B. entweder durch Extrapolation der Drehzahl anhand einer vorausgegangenen oder einer aktuellen Drehzahlentwicklung oder aufgrund des vom Fahrer angeforderten Fahrerwunschmomentes und einer daraus abgeleiteten Drehzahlentwicklung.

Aus den ermittelten Drehzahlen n$_{Startbeginn}$ und n$_{Startende}$ wird im Block 104 eine Drehzahldifferenz $\Delta$n bestimmt, die zur Abschätzung der Drehzahl beim Startende genutzt werden kann, wobei

$$\Delta n \ = \ n_{Startende} - n_{Startbeginn.} \qquad (1)$$

gilt.Daraus folgt n$_{Startende}$ = $\Delta$n + n$_{Startbeginn}$.

Bei einem angezeigten Gangwechsel des Hybridfahrzeuges wird die Drehzahldifferenz $\Delta$n direkt über das bekannte Übersetzungsverhältnis des Getriebes 7 korrigiert.

Zur Bestimmung des prädizierten Momentes kann das Steuergerät 13 im Block 105 unter Berücksichtigung des Eckdrehzahl n$_e$ des Elektromotors 1 das prädizierte Antriebsmoment M$_{trqMaxPrcd}$ aus der Formel

$$M_{trqMaxPrcd} \ = \ M_{trgMax} \quad x \quad (n_{Startbeginn} / n_{Startende}) \qquad (2)$$

Berechnen, sofern eine der beiden Drehzahlen n$_{Startende}$ bzw. n$_{Startbeginn}$ größer als die Eckdrehzahl n$_e$ ist.

Im Elektromotoren-Drehzahlbereich n$_{Startende}$ kleiner/ gleich der Eckdrehzahl n$_e$ und n$_{Startbeginn}$ kleiner/ gleich der Eckdrehzahl n$_e$ stellt sich das maximale Antriebsmoment idealisiert als nahezu unabhängig von der aktuellen Elektromotorendrehzahl dar und es gilt daher M$_{trqMaxPrcd}$ = M$_{trqMax}$.

Im Block 106 wird zum aktuell gemessenen Antriebsmoment M$_{trq}$ die Momentreserve M$_{Start}$ dazu addiert und mit dem im Voraus berechneten Antriebsmoment M$_{trqMaxPrcd}$ verglichen. Ist das prädizierte Antriebsmoment M$_{trqMaxPrcd}$ kleiner oder gleich der Summe aus dem aktuell gemessenen Antriebsmoment M$_{trq}$ und der Momentreserve M$_{Start}$ wird im Block 107 der Verbrennungsmotor sofort gestartet, indem das Steuergerät 13 ein Signal zum Schließen der Trennkupplung 4 bzw. zum Startbeginn des Verbrennungsmotors (Verbrennungsmotorstartauslösung) ausgibt. Ist das prädizierte Antriebsmoment M$_{trqMaxPrcd}$ größer als die Summe aus dem aktuell gemessenen Antriebsmoment M$_{trq}$ und der Momentenreserve M$_{Start}$ wird vom Block 106 zum Block 101 zurückgekehrt und der Überwachungsvorgang wird erneut gestartet.

Figur 4 zeigt eine Darstellung der Startauslösung des Verbrennungsmotors anhand des Momenten/Drehzahl-Diagramms des Elektromotors. Zum Startbeginn wird ein aktuelles Antriebsmoment M$_{trq}$ gemessen, welchem die konstante Momentenreserve M$_{Start}$ aufaddiert ist. Das prädizierte Antriebsmoment M$_{trqMaxPrcd1}$ liegt bei dieser Ausführungsform oberhalb der Summe des aktuell gemessenen Antriebsmomentes M$_{trq}$ und der Momentenreserve M$_{Start}$, weshalb bei dieser Konstellation der Verbrennungsmotor 3 nicht ruckfrei gestartet werden kann. Liegt das prädizierte Antriebsmoment M$_{trqMaxPrcd2}$ nur wenig unterhalb des aktuell gemessenen Antriebsmomentes M$_{trq}$ und der Momentenreserve M$_{Start}$ oder ist diesem gleich, wird der Verbrennungsmotor 3 sofort gestartet, um einen ruckfreien Start zu gewährleisten.

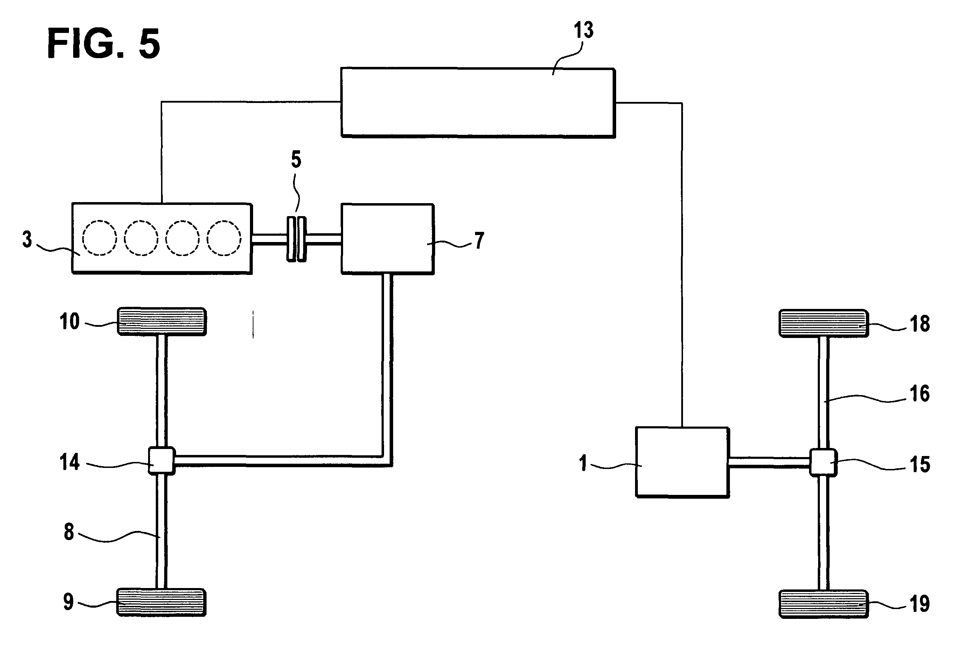

Bei Hybridfahrzeugen in einer nichtparallelen Hybridbauweise, z.B. bei einer rein elektrisch vom Verbrennungsmotor 3 unabhängig betriebenen Achse 16, wie es in Figur 5 dargestellt ist, bei dem der Elektromotor 1 der unabhängigen Achse 16 das Anschleppmoment des Verbrennungsmotors 3 liefert, muss erstens das aktuelle Antriebsmoment M$_{trq}$ des Elektromotors 1 über weitere Getriebe- und/oder Differentialübersetzungen und zweitens die Momentenreserve M$_{Start}$ über weitere Getriebe- und/oder Differentialübersetzungen und/oder Reifenhalbmesser umgerechnet werden, um den Momentenvergleich des prädizierten Momentes $M_{trqMaxPrcd}$ mit dem aktuellen Antriebsmoment $M_{trq}$ und einer addierten Momentenreserve $M_{Start}$ des Elektromotors 1, z.B. auf einer Raddrehmomentenbasis durch führen zu können.

Bei dem in Figur 5 dargestellten Achshybrid ist der Verbrennungsmotor 3 über die Anfahrkupplung 5 mit dem Getriebe 7 verbunden, welches auf ein Differential 14 führt, das auf der ersten Achse 8 angeordnet ist, von welcher die Räder 9,10 angetrieben werden. Unabhängig davon ist der Elektromotor 1 mit einem zweiten Differential 15 verbunden, welches an der zweiten Achse 16 angeordnet ist, die die Räder 18, 19 antreibt. Das Steuergerät 13 führt dabei sowohl an den Elektromotor 1 als auch an den Verbrennungsmotor 3.

Das Konzept oder Prinzip zur Ermittlung des Zeitpunktes der Verbrennungsmotorstartauslösung oder des Beginns der Startphase des Verbrennungsmotors 3 lässt sich auch im Falle eines Achshybrides wie geschildert anwenden.

## Patentansprüche

1. Verfahren zur Bestimmung des Beginns einer Startauslösung eines Verbrennungsmotors in einem Hybridfahrzeug, in welchem ein zweites Antriebsaggregat (1) das Hybridfahrzeug antreibt, wobei bei Erreichung eines bestimmten Antriebsmomentes ($M_{trqMax}$) des zweiten Antriebsaggregates (1) der Verbrennungsmotor (3) gestartet wird, **dadurch gekennzeichnet, dass** der Verbrennungsmotor (3) gestartet wird, wenn ein prädiziertes Antriebsmoment ($M_{trqMaxPrdc}$) des zweiten Antriebsaggregates (1) kleiner oder gleich dem aktuell gemessenen ($M_{trq}$) und um ein Momentenreserve ($M_{Start}$) erhöhtes Antriebsmoment des zweiten Antriebsaggregates ist.

2. Verfahren nach Anspruch 1 **dadurch gekennzeichnet, dass** das prädizierte Antriebsmoment ($M_{trqMaxPrdc}$) des als Elektromotor (1) ausgebildeten zweiten Antriebsaggregates in Abhängigkeit von einer Drehzahländerung ($\Delta n$) des Elektromotors (1) während der Startphase des Verbrennungsmotors (3) ermittelt wird.

3. Verfahren nach Anspruch 2 **dadurch gekennzeichnet, dass** die Drehzahländerung ($\Delta n$) des Elektromotors (1) aus einer Drehzahl ($n_{Startbeginn}$) zu Beginn der Startphase des Verbrennungsmotors (3) und einer vorausbestimmten Drehzahl ($n_{Startende}$) am Ende der Startphase des Verbrennungsmotors (3) ermittelt wird, wobei die Drehzahl ($n_{Startbeginn}$) zu Beginn der Startphase des Verbrennungsmotors (3) zum Zeitpunkt der Messung des aktuellen Antriebsmomentes ($M_{trq}$) des Elektromotors (1) bestimmt wird.

4. Verfahren nach Anspruch 3 **dadurch gekennzeichnet, dass** die Drehzahländerung ($\Delta n$) als konstanter Wert angenommen wird, welcher zu der zu Beginn der Startphase des Verbrennungsmotors ermittelten Drehzahl ($n_{Startbeginn}$) bei steigendem Drehzahlverlauf addiert bzw. bei sinkendem Drehzahlverlauf subtrahiert wird.

5. Verfahren nach Anspruch 3 **dadurch gekennzeichnet, dass** die vorausbestimmte Drehzahl ($n_{Startende}$) zum Ende der Startphase des Verbrennungsmotors (3) aus einer vergangenen oder einer aktuellen Drehzahlentwicklung des Elektromotors (1) bestimmt wird.

6. Verfahren nach Anspruch 3 **dadurch gekennzeichnet, dass** die Drehzahländerung ($\Delta n$) aus einem vom Fahrer des Hybridfahrzeuges eingestellten Wunschantriebsmoment ermittelt wird.

7. Verfahren nach Anspruch 3 **dadurch gekennzeichnet, dass** die Drehzahländerung ($\Delta n$) bei einem angezeigten, ermittelten, prädizierten oder erwarteten Gangwechsel des Hybridfahrzeuges über ein bekanntes Übersetzungsverhältnis eines Getriebes (7) korrigiert wird.

8. Verfahren nach mindestens einem der vorhergehenden Ansprüche **dadurch gekennzeichnet, dass** das prädizierte Antriebsmoment ($M_{trqMaxPrdc}$) des Elektromotors (1) regelmäßig während des Betriebes des Elektromotors (1), insbesondere in vorgegebenen Zeitabständen wiederholt wird.

9. Verfahren nach mindestens einem der vorhergehenden Ansprüche **dadurch gekennzeichnet, dass** die Ermittlung des prädizierten Antriebsmomentes des Elektromotors bei der Drehzahl ($n_{Startbeginn}$) bzw. einer vorausbestimmten Drehzahl ($n_{Startende}$) größer als die Eckdrehzahl $n_e$ des Elektromotors (1) bei einer nahezu konstanten Leistung erfolgt.

10. Verfahren nach mindestens einem der vorhergehenden Ansprüche **dadurch gekennzeichnet, dass** die Ermittlung des prädizierten Antriebsmomentes ($M_{trqMaxPrdc}$) des Elektromotors (1) in Abhängigkeit der Leistung einer den Elektromotor (1) mit Energie speisenden Hochvoltbatterie (11) erfolgt.

**11.** Verfahren nach mindestens einem der vorhergehenden Ansprüche **dadurch gekennzeichnet, dass** die Ermittlung des prädizierten Antriebsmomentes ($M_{trqMaxPrdc}$) des Elektromotors (1) spätestens vor der Erreichung eines um die Momentenreserve ($M_{Start}$) verringerten Wertes eines maximalen Antriebsmomentes ($M_{trqMax}$) des Elektromotors (1) erfolgt.

**12.** Verfahren nach Anspruch 2 **dadurch gekennzeichnet, dass** der Beginn der Startphase des Verbrennungsmotors (3) durch ein Steuersignal eingeleitet wird, wenn das prädizierte Antriebsmoment ($M_{trqMaxPrdc}$) des Elektromotors (1) kleiner oder gleich dem aktuell gemessenen ($M_{trq}$) und um die Momentenreserve ($M_{Start}$) erhöhten Antriebsmoment des Elektromotors (1) ist, wodurch ein Schließen einer Kupplung (4) zwischen dem Verbrennungsmotor (3) und dem Elektromotor (1) eingeleitet wird und ein Ende der Startphase des Verbrennungsmotors (3) erreicht ist, wenn die Kupplung (4) vollständig geschlossen ist und der Verbrennungsmotor (3) die ersten Einspritzungen und Zündungen vollzogen hat und/oder selbständig lauffähig ist.

**13.** Verfahren nach Anspruch 1 oder 12 **dadurch gekennzeichnet, dass** die Momentenreserve ($M_{Start}$) ein Anschleppmoment des Verbrennungsmotors (3) darstellt.

**14.** Vorrichtung zur Bestimmung des Beginns einer Startphase eines Verbrennungsmotors in einem Hybridfahrzeug, in welchem ein zweites Antriebsaggregat (1) das Hybridfahrzeug antreibt, wobei bei Erreichung eines bestimmten Antriebsmomentes ($M_{trqMax}$) des zweiten Antriebsaggregates (1) der Verbrennungsmotor (3) gestartet wird, **dadurch gekennzeichnet, dass** Mittel (13) vorhanden sind, welche den Verbrennungsmotor (3) starten, wenn ein prädiziertes Antriebsmoment ($M_{trqMaxPrdc}$) des zweiten Antriebsaggregates (1) kleiner oder gleich dem aktuell gemessenen ($M_{trq}$) und um eine Momentenreserve ($M_{Start}$) erhöhten Antriebsmoment des zweiten Antriebsaggregates (1) ist.

**15.** Vorrichtung nach Anspruch 14 **dadurch gekennzeichnet, dass** das als Elektromotor (1) ausgebildete zweite Antriebsaggregat mit einer das prädizierte Antriebsmoment ($M_{trqMaxPrdc}$) des Elektromotors (1) berechnenden und mit der Summe aus dem aktuell gemessenen Antriebsmoment ($M_{trq}$) des Elektromotors (1) und der Momentenreserve ($M_{Start}$) vergleichenden Steuereinheit (13) verbunden ist, welche eine zwischen Elektromotor (1) und Verbrennungsmotor (3) angeordnete Kupplung (4) zum Öffnen oder Schließen ansteuert.

**16.** Vorrichtung nach Anspruch 15 **dadurch gekennzeichnet, dass** der Elektromotor (1) auf einem Antriebsstrang (2) des Verbrennungsmotors (3) angeordnet ist.

**17.** Vorrichtung nach Anspruch 14 **dadurch gekennzeichnet, dass** das als Elektromotor (1) ausgebildete zweite Antriebsaggregat eine erste Achse des Fahrzeuges antreibt, während der Verbrennungsmotor (3) eine von der ersten Achse unabhängige zweite Achse des Fahrzeuges betreibt, wobei der Elektromotor (1) mit dem Steuergerät verbunden ist, welches das prädizierte ($M_{trqMaxPrdc}$) und aktuelle Antriebsmoment ($M_{trq}$) und eine addierte Momentenreserve ($M_{Start}$) um die jeweiligen Gang-/ und/oder Differentialübersetzungen und/oder Reifenhalbmesser korrigiert und den Momentenvergleich, bei welchem das prädizierte Antriebsmoment ($M_{trqMaxPrdc}$) kleiner oder gleich dem aktuell gemessenen Antriebsmoment ($M_{trq}$) und einer addierten Momentenreserve ($M_{Start}$) ist, durchführt.

**Claims**

**1.** Method for determining the beginning of the triggering of starting of an internal combustion engine in a hybrid vehicle in which a second drive unit (1) drives the hybrid vehicle, wherein, when a specific driving torque ($M_{trqMax}$) of the second drive unit (1) is reached, the internal combustion engine (3) is started, **characterized in that** the internal combustion engine (3) is started if a predicted driving torque ($M_{trqMaxPrdc}$) of the second drive unit (1) is lower than or equal to the currently measured driving torque ($M_{trq}$) of the second drive unit, which driving torque ($M_{trq}$) is increased by a torque reserve ($M_{Start}$).

**2.** Method according to Claim 1, **characterized in that** the predicted driving torque ($M_{trqMaxPrdc}$) of the second drive unit which is embodied as an electric motor (1) is determined as a function of a change ($\Delta n$) in rotational speed of the electric motor (1) during the start phase of the internal combustion engine (3).

**3.** Method according to Claim 2, **characterized in that** the change ($\Delta n$) in the rotational speed of the electric motor (1) is determined from a rotational speed ($n_{Startbeginn}$) at the beginning of the start phase of the internal combustion engine (3) and a previously determined rotational speed ($n_{Startend}$) at the end of the start phase of the internal combustion engine (3), wherein the rotational speed ($n_{Startbeginn}$) at the beginning of the start phase of the internal

EP 2 443 011 B1

combustion engine (3) is determined at the time of measurement of the current driving torque ($M_{trq}$) of the electric motor (1).

4. Method according to Claim 3, **characterized in that** the change ($\Delta n$) in the rotational speed is assumed to be a constant value which is added to the rotational speed ($n_{Startbeginn}$) determined at the beginning of the start phase of the internal combustion engine when the rotational speed profile is rising and respectively subtracted when the rotational speed profile is falling.

5. Method according to Claim 3, **characterized in that** the previously determined rotational speed ($n_{Startende}$) is determined at the end of the start phase of the internal combustion engine (3) from a preceding or a current change in rotational speed of the electric motor (1).

6. Method according to Claim 3, **characterized in that** the change ($\Delta n$) in the rotational speed is determined from a desired driving torque which is set by the driver of the hybrid vehicle.

7. Method according to Claim 3, **characterized in that** the change ($\Delta n$) in rotational speed is corrected in the case of a displayed, determined, predicted or expected gear speed change of the hybrid vehicle by means of a known transmission ratio of a transmission (7).

8. Method according to at least one of the preceding claims, **characterized in that** the predicted driving torque ($M_{trqMaxPrdc}$) of the electric motor (1) is repeated regularly during the operation of the electric motor (1), in particular at predefined time intervals.

9. Method according to at least one of the preceding claims, **characterized in that** the determination of the predicted driving torque of the electric motor takes place at the rotational speed ($n_{Startbeginn}$) and/or at a previously determined rotational speed ($n_{Startende}$) which is greater than the reference rotational speed $n_e$ of the electric motor (1) at a virtually constant power.

10. Method according to at least one of the preceding claims, **characterized in that** the determination of the predicted driving torque ($M_{trqMaxPrdc}$) of the electric motor (1) takes place as a function of the power of a high voltage battery (11) which feeds the electric motor (1) with energy.

11. Method according to at least one of the preceding claims, **characterized in that** the determination of the predicted driving torque ($M_{trqMaxPrdc}$) of the electric motor (1) takes place at the latest before a value of a maximum driving torque ($M_{trqMax}$) of the electric motor (1), which is reduced by the torque reserve ($M_{Start}$), is reached.

12. Method according to Claim 2, **characterized in that** the beginning of the start phase of the internal combustion engine (3) is initiated by a control signal if the predicted driving torque ($M_{trqMaxPrdc}$) of the electric motor (1) is smaller than or equal to the currently measured driving torque ($M_{trq}$) of the electric motor (1), which driving torque ($M_{trq}$) is increased by the torque reserve ($M_{Start}$), as a result of which the closing of a clutch (4) between the internal combustion engine (3) and the electric motor (1) is initiated and an end of the start phase of the internal combustion engine (3) is reached if the clutch (4) is completely closed and the internal combustion engine (3) has completed the first injections and the ignitions and/or is capable of running automatically.

13. Method according to Claim 1 or 12, **characterized in that** the torque reserve ($M_{Start}$) constitutes a tow-starting torque of the internal combustion engine (3).

14. Device for determining the beginning of a start phase of an internal combustion engine in a hybrid vehicle in which a second drive unit (1) drives the hybrid vehicle, wherein, when a specific driving torque ($M_{trqMax}$) of the second drive unit (1) is reached, the internal combustion engine (3) is started, **characterized in that** there are means (13) which start the internal combustion engine (3) if a predicted driving torque ($M_{trqMaxPrdc}$) of the second drive unit (1) is smaller than or equal to the currently measured driving torque ($M_{trq}$) of the second drive unit (1), which driving torque ($M_{trq}$) is increased by a torque reserve ($M_{Start}$).

15. Device according to Claim 14, **characterized in that** the second drive unit which is embodied as an electric motor (1) is connected to a control unit (13) which calculates the predicted driving torque ($M_{trqMaxPrdc}$) of the electric motor (1) and compares it with the sum of the currently measured driving torque ($M_{trq}$) of the electric motor (1) and the torque reserve ($M_{Start}$), which control unit (13) actuates a clutch (4), arranged between the electric motor (1) and the internal combustion engine (3), to open or close.

16. Device according to Claim 15, **characterized in that** the electric motor (1) is arranged on a drive train (2) of the internal combustion engine (3).

17. Device according to Claim 14, **characterized in that** the second drive unit which is embodied as an electric motor (1) drives a first axle of the vehicle, while the internal combustion engine (3) drives a second axle of the vehicle which is independent of the first axle, wherein the electric motor (1) is connected to the control device which corrects the predicted driving torque ($M_{trqMaxPrdc}$) and the current driving torque ($M_{trq}$) and an added torque reserve ($M_{start}$) by the respective gear speed and/or differential transmission ratios and/or tyre diameter and carries out the torque comparison in which the predicted driving torque ($M_{trqMaxPrdc}$) is smaller than or equal to the currently measured driving torque ($M_{trq}$) and an added torque reserve ($M_{start}$).

**Revendications**

1. Procédé pour déterminer le début du déclenchement du démarrage d'un moteur à combustion interne dans un véhicule hybride, dans lequel un deuxième groupe propulseur (1) entraîne le véhicule hybride, le moteur à combustion interne (3) étant démarré lorsqu'un couple d'entraînement ($M_{trqMax}$) donné du deuxième groupe propulseur (1) est atteint, **caractérisé en ce que** le moteur à combustion interne (3) est démarré lorsqu'un couple d'entraînement prédit ($M_{trqMaxPrdc}$) du deuxième groupe propulseur (1) est inférieur ou égal au couple d'entraînement actuellement mesuré ($M_{trq}$) et augmenté d'une réserve de couple ($M_{start}$) du deuxième groupe propulseur.

2. Procédé selon la revendication 1, **caractérisé en ce que** le couple d'entraînement prédit ($M_{trqMaxPrdc}$) du deuxième groupe propulseur réalisé sous la forme d'un moteur électrique (1) est déterminé en fonction d'une variation de la vitesse de rotation ($\Delta n$) du moteur électrique (1) pendant la phase de démarrage du moteur à combustion interne (3).

3. Procédé selon la revendication 2, **caractérisé en ce que** la variation de la vitesse de rotation ($\Delta n$) du moteur électrique (1) est déterminée à partir d'une vitesse de rotation ($n_{Startbeginn}$) au début de la phase de démarrage du moteur à combustion interne (3) et d'une vitesse de rotation prédéterminée ($n_{Startende}$) à la fin de la phase de démarrage du moteur à combustion interne (3), la vitesse de rotation ($n_{Startbeginn}$) au début de la phase de démarrage du moteur à combustion interne (3) étant déterminée à l'instant de la mesure du couple d'entraînement actuel ($M_{trq}$) du moteur électrique (1).

4. Procédé selon la revendication 3, **caractérisé en ce que** la variation de la vitesse de rotation ($\Delta n$) est supposée être une valeur constante qui est additionnée à la vitesse de rotation ($n_{Startbeginn}$) déterminée au début de la phase de démarrage du moteur à combustion interne en présence d'une courbe croissante de la vitesse de rotation ou qui lui est soustraite en présence d'une courbe décroissante de la vitesse de rotation.

5. Procédé selon la revendication 3, **caractérisé en ce que** la vitesse de rotation prédéterminée ($n_{Startende}$) est déterminée à la fin de la phase de démarrage du moteur à combustion interne (3) à partir d'une évolution passée ou actuelle de la vitesse de rotation du moteur électrique (1).

6. Procédé selon la revendication 3, **caractérisé en ce que** la variation de la vitesse de rotation ($\Delta n$) est déterminée à partir d'un couple d'entraînement souhaité réglé par le conducteur du véhicule hybride.

7. Procédé selon la revendication 3, **caractérisé en ce que** la variation de la vitesse de rotation ($\Delta n$) est corrigée dans le cas d'un changement de rapport indiqué, déterminé, prévu ou attendu du véhicule hybride par le biais d'un rapport de démultiplication connu d'une boîte de vitesses (7).

8. Procédé selon au moins l'une des revendications précédentes, **caractérisé en ce que** le couple d'entraînement prédit ($M_{trqMaxPrdc}$) du moteur électrique (1) est répété régulièrement pendant le fonctionnement du moteur électrique (1), notamment à des intervalles de temps prédéfinis.

9. Procédé selon au moins l'une des revendications précédentes, **caractérisé en ce que** la détermination du couple d'entraînement prédit du moteur électrique s'effectue à la vitesse de rotation ($n_{Startbeginn}$) ou à une vitesse de rotation prédéterminée ($n_{Startende}$) supérieure à la vitesse de rotation de référence $n_e$ du moteur électrique (1) à une puissance quasiment constante.

**10.** Procédé selon au moins l'une des revendications précédentes, **caractérisé en ce que** la détermination du couple d'entraînement prédit ($M_{trqMaxPrdc}$) du moteur électrique (1) s'effectue en fonction de la puissance d'une batterie à haute tension (11) qui alimente en énergie le moteur électrique (1).

**11.** Procédé selon au moins l'une des revendications précédentes, **caractérisé en ce que** la détermination du couple d'entraînement prédit ($M_{trqMaxPrdc}$) du moteur électrique (1) s'effectue au plus tard avant d'atteindre une valeur d'un couple d'entraînement maximum ($M_{trqMax}$) du moteur électrique (1), diminuée d'une réserve de couple ($M_{Start}$).

**12.** Procédé selon la revendication 2, **caractérisé en ce que** le début de la phase de démarrage du moteur à combustion interne (3) est initié par un signal de commande lorsque le couple d'entraînement prédit ($M_{trqMaxPrdc}$) du moteur électrique (1) est inférieur ou égal au couple d'entraînement actuellement mesuré ($M_{trq}$) et augmenté de la réserve de couple ($M_{start}$) du moteur électrique (1), ce qui initie une fermeture d'un accouplement (4) entre le moteur à combustion interne (3) et le moteur électrique (1) et une fin de la phase de démarrage du moteur à combustion interne (3) est atteinte lorsque l'accouplement (4) est complètement fermé et le moteur à combustion interne (3) a accompli les premières injections et les premiers allumages et/ou peut tourner de manière autonome.

**13.** Procédé selon la revendication 1 ou 12, **caractérisé en ce que** la réserve de couple ($M_{Start}$) représente un couple de mise en mouvement du moteur à combustion interne (3).

**14.** Dispositif pour déterminer le début d'une phase de démarrage d'un moteur à combustion interne dans un véhicule hybride, dans lequel un deuxième groupe propulseur (1) entraîne le véhicule hybride, le moteur à combustion interne (3) étant démarré lorsqu'un couple d'entraînement ($M_{trqMax}$) donné du deuxième groupe propulseur (1) est atteint, **caractérisé en ce qu'**il existe des moyens (13) qui démarrent le moteur à combustion interne (3) lorsqu'un couple d'entraînement prédit ($M_{trqMaxPrdc}$) du deuxième groupe propulseur (1) est inférieur ou égal au couple d'entraînement actuellement mesuré ($M_{trq}$) et augmenté d'une réserve de couple ($M_{start}$) du deuxième groupe propulseur (1).

**15.** Dispositif selon la revendication 14, **caractérisé en ce que** le deuxième groupe propulseur réalisé sous la forme d'un moteur électrique (1) est relié avec une unité de commande (13) qui calcule le couple d'entraînement prédit ($M_{trqMaxPrdc}$) du moteur électrique (1) et qui le compare avec la somme du couple d'entraînement actuellement mesuré ($M_{trq}$) du moteur électrique (1) et de la réserve de couple ($M_{Start}$), laquelle commande l'ouverture ou la fermeture d'un accouplement (4) disposé entre le moteur électrique (1) et le moteur à combustion interne (3).

**16.** Dispositif selon la revendication 15, **caractérisé en ce que** le moteur électrique (1) est disposé sur une chaîne de transmission (2) du moteur à combustion interne (3).

**17.** Dispositif selon la revendication 14, **caractérisé en ce que** le deuxième groupe propulseur réalisé sous la forme d'un moteur électrique (1) entraîne un premier essieu du véhicule, alors que le moteur à combustion interne (3) fait fonctionner un deuxième essieu du véhicule, indépendant du premier essieu, le moteur électrique (1) étant relié avec le contrôleur qui corrige le couple d'entraînement prédit ($M_{trqMaxPrdc}$) et le couple d'entraînement actuel ($M_{trq}$) ainsi qu'une réserve de couple ($M_{Start}$) ajoutée en fonction des démultiplications du rapport et/ou du différentiel et/ou du rayon des roues respectifs et effectue la comparaison des couples lors de laquelle le couple d'entraînement prédit ($M_{trqMaxPrdc}$) est inférieur ou égal au couple d'entraînement actuellement mesuré ($M_{trq}$) et une réserve de couple ($M_{Start}$) ajoutée.

13

14

9

8

15

2

10

3

4

1

5

6

7

12

11

**FIG. 1**

EP 2 443 011 B1

Moment
M [ Nm ]

M = const

$M_{trq\ Max}$

$M_{trq\ Max\ Prdc}$

FIG. 2

$n_E$    $n_{Startbeginn}$    $n_{Startende}$    Drehzahl n [ 1/min ]

Moment
M [ Nm ]

M = const

$M_{trq\ Max}$

$M_{trq\ Max\ Prdc}$

$M_{START}$

$M_{trq}$

$M_{trq\ Max\ Prdc\ 1}$

FIG. 4

$n_E$    $n_{Startbeginn}$    $n_{Startende}$    Drehzahl n [ 1/min ]

**FIG. 3**

# FIG. 5

EP 2 443 011 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006008640 A